# EUROPEAN PATENT APPLICATION

(11) **EP 3 349 484 A1**
(43) Date of publication of application: **18.07.2018**
(21) Application number: 18151600.6
(22) Date of filing: 15.01.2018
(51) Int. Cl.: H04S 7/00

(54) **SYSTEM AND METHOD FOR MAKING AVAILABLE A PERSON-RELATED AUDIO TRANSMISSION**

(30) Priority: 13.01.2017 DE 102017100628
(71) Applicant: Visteon Global Technologies, Inc., Van Buren Township, MI 48111-5711 (US)
(72) Inventor: VAN LAACK, Alexander, 52072 Aachen (DE); TORSCHMIED, Axel, 75334 Strabenhardt (DE); PREUSSLER, Stephan, 53347 Alfter (DE)
(74) Representative: Dummett Copp LLP

(57) **Abstract**

The invention makes possible a directed transmission to a specific person, so that acoustic signals preferably are only perceptible to this person. The invention-specific system has a person recognition device, with which at least one person is able to be identified by at least one identifying feature as the recipient of person-related acoustic signals. Additionally, the system comprises a target detection device for detecting and tracking a position of a person identified as a recipient of person-related acoustic signals, a renderer for computing an acoustic beam formation focused at a position of the person identified as the recipient of person-related acoustic signals, and at least one first speaker arrangement able to be guided by the renderer and having at least two speakers, by which person-related acoustic signals are able to be transmitted, focused at the position of the person identified as the recipient of person-related acoustic signals, with the renderer further set up to adjust the focus of acoustic beam formation to a change in the position of the person identified as the recipient of person-related acoustic signals.

## Description

The invention relates to a system and a method for making available a person-related audio transmission. The invention makes possible a transmission directed to a specific person, so that acoustic signals preferably are perceived exclusively by this person.

Acoustic beam formation is a software-controlled signal processing technique in which at least two speakers are used for directed transmission of acoustic signals from a certain direction. With this a directed or focused audio transmission is achieved, in that the speakers are combined in a phase-controlled arrangement such that the transmitted acoustic signals as a result of interference are amplified at a focal point or in a focal area, with acoustic signals outside the focal point deleted and consequently no longer perceptible. Through acoustic beam formation it is therefore possible to transmit acoustic signals in such a way that it is possible to perceive the acoustic signals only in a preset area. Therefore, preferably the acoustic beam formation is focused at the head of a person in an audible area optimized for one person.

However, the possibilities of controlling directional acoustic beam formation are problematical if the position of the hearer's head is not known, or a change in the hearer's position is not determinable. The disadvantage of this is that the hearer is confined locally to his hearing position. In addition, insufficiently focused beam formation causes reflections and superpositions.

Solutions are known from US 2013/0121515 A1 and US 2014/0294210 A1 in which devices for detecting a head position or a head movement of one person, also designated as "head trackers," are used, to use the head position as the basis for focusing acoustic beam formation for audio transmission to the area of a person's head.

Since with this only the head and the head movement are detected, a danger exists that the head detected by the target detection can be confused with a head of another person, if two or more persons approach or if two are more persons are close to each other, as is the case with multiple occupants of a vehicle or several persons in a room. Due to this, with the audio transmission there can be superpositionings which have a distorting effect on the audible quality of the individual hearer.

Therefore, a solution is required which makes possible a person-related audio transmission, without the transmitted acoustic signals being able to be involuntarily heard by another person for whom perception of the acoustic signals is not intended.

Therefore, it is the object of the invention to propose a device and a method for making available a person-related audio transmission.

The object is attained by a system with the features of patent claim 1 and a method having the features of patent claim 6. Advantageous embodiments or developments are indicated in the particular dependent patent claims.

The invention-specific system for making available a person-related audio transmission has a person recognition device, by which at least one person is identifiable using at least one identifying feature as the recipient of person-related acoustic signals. Additionally, the invention-specific system has a target detection device for detecting and tracking the position of a person identified as the recipient of person-related acoustic signals, a renderer for computing focused acoustic beam formation in the position of a person identified as a recipient of person-related acoustic signals, and having at least one speaker arrangement that is controllable by the renderer and at least two speakers, by which person-related acoustic signals are able to be transmitted in focused fashion with the aid of computed acoustic beam formation in the position of the person identified as the recipient of person-related acoustic signals. The renderer additionally is set up so as to adapt the focus of the acoustic beam formation to a change in the position of the person identified as the recipient of person-related acoustic signals.

Since the invention-specific system has a person recognition device for identification of persons, with the aid of acoustic beam formation it is possible to transmit person-related acoustic signals only to the person who is provided or identifiable as the recipient for person-related acoustic signals. With this, erroneous focusing of the acoustic beam formation can be avoided, since the position of a person identified as the recipient of person-related acoustic signals is detected, and the focus, or focal area, of the acoustic beam formation for focused transmission of the person-related acoustic signals is dynamically adapted to the position of the person identified as the recipient of person-related acoustic signals.

For clarity, the person identified as the recipient of the person-related acoustic signals is designated hereinafter as the receiving person.

For generation of the acoustic beam formation computed by the renderer on the basis of the position of the receiving person, at least one speaker arrangement can be provided as the audio source. Such a speaker arrangement, which can also be designated as a speaker array, has at least two speakers. A speaker arrangement can, however, advantageously have more than two speakers, preferably at least four speakers.

Additionally, the system can have multiple speaker arrangements controllable independent of the renderer. Each speaker arrangement is set up for focused transmission of person-related acoustic signals to the position of the receiving person.

What is understood by focused is that with the aid of acoustic signals able to be individually controlled with the aid of the renderer of a speaker arrangement, acoustic signals can be transmitted in such a way that the acoustic signals are perceptible only in a preset area at the position of the receiving person.

The personal recognition device can advantageously have face recognition so that a person is identifiable using at least one facial feature to be the recipient of person-related acoustic signals. Appropriately the personal recognition device can have at least one camera for detecting identifying features. With this, the personal recognition system preferably has at least two cameras to make it possible to identify a person from at least two directions.

According to an advantageous embodiment of the invention, the personal recognition device can have more than two cameras, so it is possible to detect identifying features and detect a person from every direction.

The identification of persons allows a differentiation of persons, so that an acoustic beam formation for transmission of person-related acoustic signals is not erroneously focused on the position of a person for whom the person-related acoustic signals are not meant. Thus, person-related acoustic signals are not transmitted to persons who have not been identified as recipients of person-related acoustic signals.

According to a development of the invention, the identifying feature can be a transponder which is carried by a person. In this case the person recognition device is designed for recognition of transponder signals to identify a person as the receiving person.

The target detection device for detecting the position of the head of a person identified as the receiver of person-related acoustic signals can preferably be so set up that a transmission of the person-related acoustic signals can be focused on a position of the head of the person identified as the receiver of person-related acoustic signals. By this means, in advantageous fashion, the perceptibility of person-related acoustic signals is improved for the receiving person, with the reflections and superpositions with acoustic beam formations of additional or other receiver persons being able to be reduced through exact target focusing of acoustic beam formation.

Since the personal recognition and the target detection or position determination of an identified person can be based on an evaluation of camera images, provision can be made that the person recognition device and the target detection device be combined into one device. Camera images for identifying a person and/or for detecting and tracking the position of a receiver person can be assessed by means of a computer unit, with the computer unit having appropriate software.

The system preferably makes it possible to independently expose multiple persons present in a space to sonic waves, with the receiver person always being the only one who can detect the acoustic signals provided for him or her.

According to an advantageous development of the system, at least one controllable speaker arrangement in addition to the renderer can be provided, which is able to activated by the renderer depending on the position of the person identified as the receiver of person-related acoustic signals for a transmission of focused person-related acoustic signals to the person identified as the receiver of person-related acoustic signals, with the first speaker arrangement for transmission of focused person-related acoustic signals to a person identified as the receiver of person-related acoustic signals able to be deactivated.

In advantageous fashion, at least two or more of the speaker arrangements able to be controlled from the renderer can be activated for focused transmission of person-related acoustic signals to a receiver person can be activated or deactivated, with the activation or deactivation depending on the position of the receiver person. By this means it is possible to adjust the focus of acoustic beam formation to a change in the position of the receiving person, especially if the receiving person is at a distance from a speaker arrangement, which does not make possible any optimal acoustic beam formation for focused transmission of person-related acoustic signals. In this case, an additional speaker arrangement, which is set up at a more favorable distance from the receiving person for focused transmission of person-related acoustic signals, is activated for transmission of person-related acoustic signals to the receiving person. The distance between a receiving person and a speaker arrangement can be determined by the target detection device.

With the invention-specific method for making available a person-related audio transmission, at least one person is identified as the receiver of person-related acoustic signals by means of at least one identifying feature. Using the detected position of the person identified as the receiver of person-related acoustic signals, emitted from at least one audio source, person-related acoustic signals can be transmitted in focused fashion to the position of the person identified as the receiver of person-related acoustic signals. With this, the position of the person identified as the recipient of person-related acoustic signals is tracked, and the focus of acoustic beam formation is adjusted to a change in the position of the person identified as the recipient of person-related acoustic signals.

With the invention-specific method, person-related acoustic signals are transmitted only to persons who can be identified by means of an identifying feature as the recipient of person-related acoustic signals. Through the positional data of a receiving person determined through target tracking of a receiving person, it is additionally possible to focus acoustic beam formation on the position of the receiving person, with persons who cannot be identified as the receiving person being excluded from acoustic beam formation. The focus, or the focal area, of acoustic beam formation advantageously computed dynamically on the basis of positional data of a receiving person, and the computed acoustic beam formation, is generated by at least one audio source, which can be a speaker arrangement having at least two speakers.

At least one facial feature of a person can advantageously be detected as an identifying feature, to identify the person as the receiver of person-related acoustic signals. For example, the configuration of the eyes, mouth and nose of a person can be taken into account for this. Additionally, the color of the eye and/or an iris pattern can be detected as an identifying feature. Facial recognition advantageously permits unambiguous identification of a person as the receiving person. To make possible identification of a moving person, provision can be made that a person be observed from more than one direction.

According to an advantageous embodiment of the invention-specific method, provision can be made that a position of the head of a person identified as the recipient of person-related acoustic signals is detected and, using the detected head position, the person-related acoustic signals can be transmitted in focused fashion to the head position. It is especially advantageous to focus acoustic beam formation at the head position of the receiving person if other persons, who are not designated to detect the person-related acoustic signals, are close to the receiving person.

According to a further preferred embodiment of the invention-specific method, provision can be made that the acoustic beam formation for transmission of person-related acoustic signals to the position of the person identified as the recipient of person-related acoustic signals, depending on the position of the person identified as the recipient of person-related acoustic signals, be relayed to at least one additional audio source. Upon relay of acoustic beam formation, an additional audio source, which means an additional speaker arrangement, is active for transmission of person-related acoustic signals to the position of the receiving person, with the original audio source for focused transmission of person-related acoustic signals at the position of the receiving person able to be deactivated. By this means it is possible always to ensure optimal focusing of acoustic beam formation at the position of a moving receiving person.

To summarize, the invention-specific system and the invention-specific method for making available a person-related audio transmission have the following advantages:
- Generation of private audio spaces by control and guidance of audio beams;
- Context-sensitive direction of audio beams, and a context-sensitive audio output.

The invention will now be further described, by way of example only, and with reference to the accompanying drawings, in which:
Figure 1 is a schematic depiction of a system in a preferred embodiment of the invention for making available a person-related audio transmission in a vehicle;
Figure 2 is a schematic depiction of a system in a preferred embodiment of the invention for making available a person-related audio transmission in a room;
Figure 3 is a flow chart of a method in a preferred embodiment of the invention for making available a person-related audio transmission; and
Figure 4 is a flow chart for further clarification of the method for making available a person-related audio transmission.

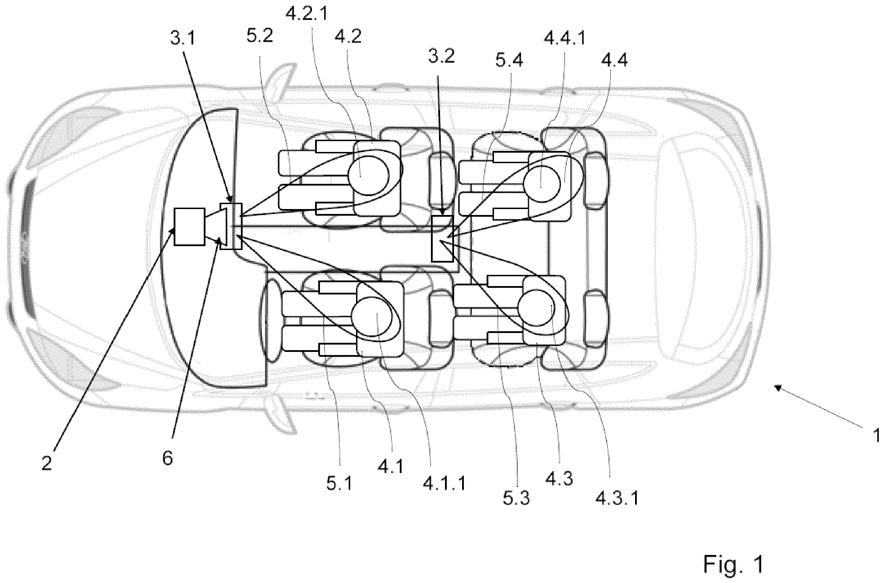

Figure 1 is a schematic depiction of a system for making available a person-related audio transmission in a vehicle 1. The system for making available a person-related audio transmission has a person recognition device 2, by which, using at least one identifying feature, at least one person 4.1, 4.2. 4.3, 4.4 is able to be identified as the recipient of person-related acoustic signals. Currently the vehicle occupants 4.1, 4.2, 4.3, 4.4 are the persons.

The person identification device 2 comprises a camera 6, by which identifying features of the vehicle occupants 4.1, 4.2, 4.3, 4.4 can be detected for an identification. With this, camera 6 is set up in such a way that at least the heads 4.1.1, 4.2.1, 4.3.1, 4.4.1 of vehicle occupants 4.1, 4.2, 4.3, 4.4 can be detected. An identifying feature of a vehicle occupant 4.1, 4.2, 4.3, 4.4 can be detected by evaluation of the images of heads 4.1.1. 4.2.1, 4.3.1, 4.4.1 provided by camera 6, by means of a computer unit, which can be a component part of person recognition device 2. As an alternative, an already present computer unit within the vehicle can be used, to assess camera images delivered by camera 6 for detection of identifying features. Preferably, person recognition device 2 is configured as a device for facial recognition, with at least one facial feature of a vehicle occupant 4.1, 4.2, 4.3, 4.4 being detected, to identify one vehicle occupant 4.1, 4.2, 4.3, 4.4 as the recipient of person-related acoustic signals.

In addition, the invention-specific system comprises a target detection device for detecting and tracking a position of a head 4.1.1, 4.2.1, 4.3.1, 4.4.1 of a vehicle occupant 4.1, 4.2, 4.3, 4.4 identified as the recipient of person-related acoustic signals. In the system indicated, the target detection device is integrated into person recognition device 2, since for target tracking of the position of head 4.1.1., 4.2.1, 4.3.1, 4.4.1, of vehicle occupants 4.1, 4.2, 4.3, 4.4, the camera images made available by camera 6 are evaluated. The camera images for target detection can be assessed by a computer unit not shown, or the internal vehicle computer unit, with appropriate software able to be used. In the target detection, the position of a head 4.1.1, 4.2.1, 4.3.1, 4.4.1, as well as an inclination or turning of a head 4.1.1, 4.2.1, 4.3.1, 4.4.1 can be determined.

The system additionally comprises a renderer, not shown, for computation of a focused acoustic beam 5.1, 5.2, 5.3, 5.4 at a position of a head 4.1.1., 4.2.1, 4.3.1, 4.4.1 of a vehicle occupant 4.1, 4.2, 4.3, 4.4 identified as the recipient of person-related acoustic signals, as well as two speaker arrangements 3.1, 3.2, able to be directed by the renderer and each having at least two speakers, by which the acoustic beam formations 5.1, 5.2, 5.3, 5.4 computed by the renderer are each able to be focused on the head positions of vehicle occupants 4.1, 4.2, 4.3, 4.4, to be able in focused fashion to transmit person-related acoustic signals to the position of a head 4.1.1, 4.2.1, 4.3.1, 4.4.1 of a vehicle occupant 4.1, 4.2, 4.3, 4.4 identified as the recipient of person-related acoustic signals.

The speaker arrangement 3.1 situated in the front part of the passenger compartment generates a beam formation 5.1 focused on a position of the head 4.1.1 of vehicle occupant 4.1, as well as a beam formation 5.2 focused on a position of the head 4.2.1 of vehicle occupant 4.2. The speaker arrangement 3.2 situated midway through the passenger compartment generates a beam formation 5.3 focused on the position of the head 4.3.1 of vehicle occupant 4.3, and a beam formation 5.4 focused on a position of the head 4.4.1 of vehicle occupant 4.4. Focusing of acoustic beam formations 5.1, 5.2, 5.3, 5.4 is based on the positional data made available by target detection of heads 4.1.1, 4.2.1, 4.3.1, 4.4.1.

Additionally, the renderer is set up to adjust the focus of the acoustic beam formations 5.1, 5.2, 5.3, 5.4 to a change in the position of head 4.1.1, 4.2.1, 4.3.1, 4.4.1, which can be caused for example by inclination or turning of head 4.1.1. 4.2.1, 4.3.1, 4.4.1, or if the vehicle occupant 4.1. 4.2, 4.3, 4.4 changes his seat position, or is so computed it that with speaker arrangements 3.1, 3.2 the focus of the particular beam formations 5.1, 5.2, 5.3, 5.4 can be adjusted. Thus it is possible that person-related acoustic signals can be assigned even if the proper receiving person changes his seat.

The person-related acoustic signals can be made available to the renderer in the form of audio data, with the audio data able to include information which specifies for which person 4.1, 4.2, 4.3, 4.4 or group of persons the person-related acoustic signals are provided.

According to another embodiment, a central logic unit or a decentralized logic unit made available via a wireless connection can be provided, which, with the aid of person recognition device 2, detects for which person 4.1, 4.2, 4.3, 4.4 the person-related acoustic data are provided. If for example the logic unit detects an assignment of a person 4.1, 4.2, 4.3, 4.4 as the receiving person, by means of a cell phone of this person 4.1, 4.2, 4.3, 4.4, telephone calls or acoustic signals of the phone call are transmitted exclusively to the receiving person 4.1, 4.2. 4.3, 4.4.

Additionally, provision can be made that warnings can be transmitted in focused fashion with context sensitivity direct to the driver as the receiving person 4.1. The person-related data are not in the Sound section. Rather, the logic unit, which can be a component part of vehicle 1, dictates that the audio transmission just made is only relevant or meant for the driver as receiving person 4.1.

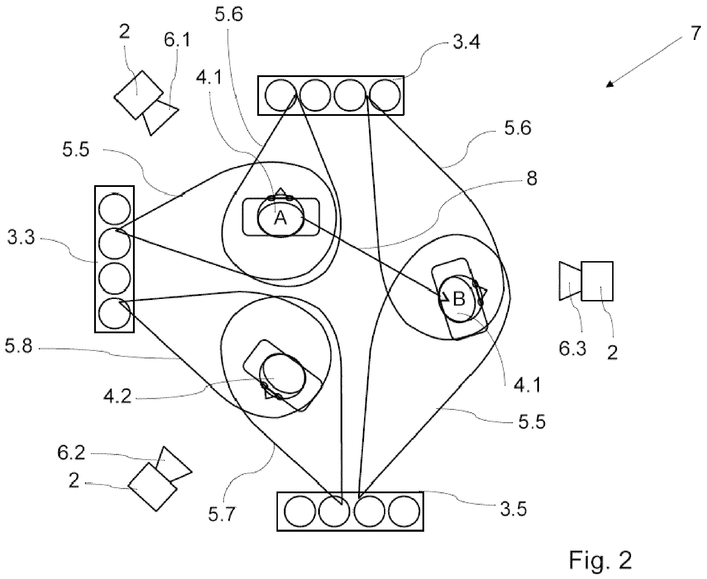

Figure 2 is a schematic depiction of a system for making available a person-related audio transmission in a room 7. The room 7 is depicted from above, with two persons 4.1, 4.2 in room 7. The arrow shown between position A and position B clarifies a movement 8 of person 4.1 from position A to position B. In contrast to the system shown in figure 1, person recognition device 2 includes three cameras 6.1, 6.2, 6.3 which are so arranged that persons 4.1, 4.2 can be detected from different directions. The images made available by cameras 6.1, 6.2, 6.3 serve for detection of identifying features, preferably facial features, of persons 4.1, 4.2, as well as for target acquisition, target tracking and position determination of persons 4.1, 4.2. The target acquisition, which is integrated into person recognition device 2, advantageously makes possible a detection of the positions of heads 4.1.1, 4.2.1 of persons 4.1, 4.2.

Additionally, the system shown in figure 2 shows three speaker arrangements 3.3, 3.4, 3.5 each configured with four speakers, which are able to be directed independent of each other from a renderer which is not shown. Speaker arrangements 3.3, 3.4, 3.5, generate acoustic beam formations 5.5, 5.6, 5.7, 5.8 computed by the renderer, which, on the basis of data acquired by the target detection device, of the positions of heads 4.1.1, 4.2.1 of persons 4.1, 4.2 are focused for transmission of person-related acoustic signals to the positions of heads 4.1.1,4.2.1.

The camera 6.1 of person recognition device 2 uses a facial feature to recognize person 4.1 at position A as the recipient for person-related acoustic signals. At the same time, the target acquisition device detects the position of person 4.1 identified as the recipient of person-related acoustic signals, also designated as the receiving person. Additionally, a target detection is activated to track receiving person 4.1. Using the positional data on receiving person 4.1, the renderer computes two acoustic beam formations 5.5, 5.6 focused at the position of receiving person 4.1, for focused transmission of person-related acoustic signals to the position of receiving person 4.1, with a first focused acoustic beam formation 5.5 being generated by speaker arrangement 3.3 and a second acoustic beam generation 5.6 being generated by speaker arrangement 3.4.

The focal areas of the two acoustic beam formations 5.5, 5.6 intersect at position A of receiving person 4.1. If receiving person 4.1 moves from position A to position B, as is shown in figure 2 by the arrow indicating movement 8, the positional change is tracked by the target detection device. The positional data relayed thus from the target detection device to the renderer are used to compute an adjustment of focal areas of acoustic beam formations 5.5, 5.6, and with the speaker arrangements 3.3, 3.4 generate the altered position of receiving person 4.1.

At position B, receiving person 4.1 is in the viewing range of camera 6.3 of person recognition device 2, thus ensuring that receiving person 4.1 is identified, detected and tracked with the aid of camera images from camera 6.3. Since receiving person 4.1 in position B is at a distance from speaker arrangement 3.3, which is not favorable for an acoustic beam formation 5.5 emitted from speaker arrangement 3.3, generation of acoustic beam formation 5.5 is transferred to speaker arrangement 3.5, since, due to the smaller distance between receiving person 4.1 and speaker arrangement 3.5, it can be ensured that the quality of acoustic beam formation 5.5 will be comparatively better.

In shifting acoustic beam formation 5.5 for generation, at speaker arrangement 3.5 the renderer activates speaker arrangement 3.5 for generation of a beam formation 5.5 focused on position B, with speaker arrangement 3.3 being deactivated as a source for generating acoustic beam formation 5.5.

The system thus makes possible a change of audio sources for generation of an acoustic beam formation in order to make possible a person-related audio transmission of a receiving person in motion. Advantageously, receiving person 4.1 is irradiated with sound by at least two acoustic beam formations 5.5, 5.6 focused on the positions A or B, so that there is little perception of a change between speaker arrangements 3.3, 3.5 as a source for generation of acoustic beam formation 5.5.

The speakers of speaker arrangements 3.1, 3.2, 3.3, 3.4, 3.5 are advantageously installed in fixed fashion. It is not necessary to move the speakers.

In the visual field of camera 6.2 of person recognition device 2 is person 4.2, who is detected based on a facial feature which is detected by camera images of camera 6.2, and identified as the recipient or as receiving person 4.2 for person-related acoustic signals. Since receiving person 4.2 is in the vicinity of speaker arrangements 3.3, 3.5, the acoustic beam formations 5.7, 5.8 computed by the renderer for focused transmission of person-related acoustic signals to the position of receiving person 4.2 are generated by the speaker arrangements 3.3, 3.5, with acoustic beam formation 5.7 generated by speaker arrangement 3.5 and acoustic beam formation 5.8 generated by speaker arrangement 3.3. The focal areas of acoustic beam formations 5.7, 5.8 intersect at the position of receiving person 4.2. Based on personal identification with person identification device 2, it is possible to irradiate multiple persons 4.1, 4.2 present in room 7 with person-related acoustic signals, independent of each other.

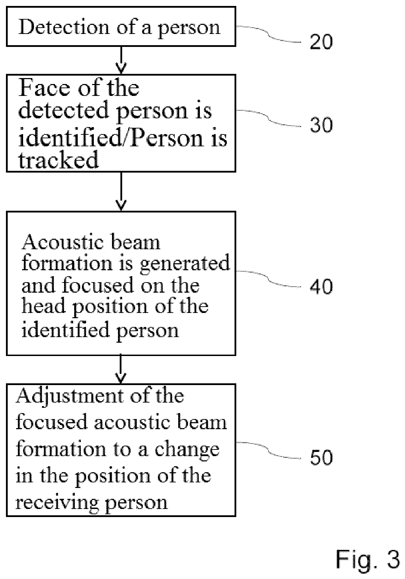

Figure 3 is a flow chart of a method for making available a person-related audio transmission. The procedure is that in a first step 20 a person is detected and the detected person in a following step 30 is detected using at least one identifying feature as the recipient of person-related acoustic signals, and with this a target tracking is activated of the position of the person identified as the recipient of person-related acoustic signals. In the next step 40, using the detected position of the person identified as the recipient of person-related acoustic signals, emitted from at least one audio source, by means of acoustic beam formation, person-related acoustic signals are transmitted in focused fashion to the position, preferably the position of the head, of the person identified as the recipient of person-related acoustic signals.

In a further procedural step 50, the position of the person identified as the recipient of person-related acoustic signals and the focus of the acoustic beam formation are adjusted to a change in the position of the person identified as the recipient of person-related acoustic signals. With this, provision can be for achieving an adjustment of the acoustic beam formation via a change of audio sources for generation of acoustic beam formation.

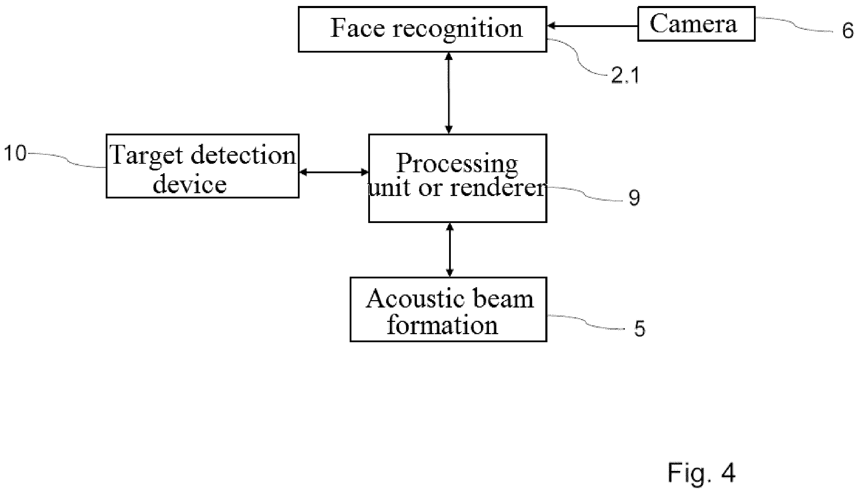

Figure 4 is a flow chart for additional elucidation of the method for making available a person-related audio transmission. First, camera images of a camera 6, which is a component part of a person recognition device with facial recognition 2.1, is provided to the facial recognition device 2.1. Upon detecting a person, the face is detected using at least one facial feature as the identifying feature of this person and is stored as data, to again recognize the person based on his facial feature and to distinguish him from other persons. At the same time, from the identified person, who now is defined as the recipient of person-related acoustic signals, positional data are determined by a target detection device 10 and the position is tracked by target detection device 10. For target detection, provision can be made that target detection device 10 has access to camera images of camera 6. The positional data detected by target detection device 10 and the personal identification data of facial recognition device 2.1 are made available to a processing unit 9. Processing unit 9 comprises a renderer for computation of an acoustic beam formation 5 focused on a person identified at a position as recipient of person-related acoustic signals, which, with at least one audio source being generated in the form of a speaker arrangement at a position of a person identified as the recipient of person-related acoustic signals, so that person-related acoustic signals can be transmitted in focused fashion to the position of the person identified as the recipient of person-related acoustic signals.

### List of Reference Symbols

- 1: vehicle
- 2: person recognition device
- 2.1: facial recognition device
- 3.1, 3.2, 3.3, 3.4. 3.5: speaker arrangement
- 4.1, 4.2, 4.3, 4.4: person, vehicle occupant, receiving person
- 4.1.1,4.2.1.4.3.1,4.4.1: head
- 5.1,5.2,5.3.5.4,5.5,:
- 5.6, 5.7, 5.8: acoustic beam formation
- 6, 6.1, 6.2, 6.3: camera
- 7: room
- 8: motion
- 9: processing unit, renderer
- 10: target detection device

- 20: detection of a person
- 30: identification of a person - person is tracked
- 40: acoustic beam formation is generated
- 50: adjustment of focused beam formation to Changed position of receiving person

- A, B: position

## Claims

1. A system for making available a person-related audio transmission, comprising a person recognition device (2), by which at least one person (4.1, 4.2, 4.3, 4.4) is able to be identified by means of at least one identifying feature as the recipient of person-related acoustic signals, a target detection device (10) for detecting and tracking the position of a person (4.1, 4.2, 4.3, 4.4) identified as the recipient of person-related acoustic signals, a renderer for computation of an acoustic beam formation (5, 5.1, 5.2, 5.3, 5.4, 5.5, 5.6, 5.7, 5.8) focused at the position of the person (4.1, 4.2, 4.3, 4.4) identified as the recipient of person-related acoustic signals, and at least one first speaker arrangement (3.1, 3.2, 3.3, 3.4, 3.5) able to be guided by the renderer and having at least two speakers, by which person-related acoustic signals are able to be transmitted, with the aid of the computed acoustic beam formation (5, 5.1, 5.2, 5.3, 5.4, 5.5, 5.6, 5.7, 5.8), focused at the position of the person (4.1, 4.2, 4.3, 4.4) identified as the recipient of person-related acoustic signals, with the renderer further set up to adjust the focus of acoustic beam formation (5, 5.1, 5.2, 5.3, 5.4, 5.5, 5.6, 5.7, 5.8) to a change in the position of the person (4.1, 4.2, 4.3, 4.4) identified as the recipient of person-related acoustic signals.

2. The system of claim 1, **characterized in that** the person recognition device (2) has a facial recognition device (2.1), so that a person (4.1, 4.2, 4.3, 4.4) is able to be identified using at least one facial feature as the recipient of person-related acoustic signals.

3. The system of claim 1 or claim 2, **characterized in that** the person recognition device (2) has at least one camera (6, 6.1, 6.2, 6.3).

4. The system of claim 3, **characterized in that** the person recognition device (2) has at least two cameras (6, 6.1, 6.2, 6.3).

5. The system of any preceding claim, **characterized in that** the target recognition device (10) is set up for detection of the position of a head (4.1.1, 4.2.1, 4.3.1, 4.4.1) of the person (4.1, 4.2, 4.3. 4.4) identified as the recipient of person-related acoustic signals.

6. The system of any preceding claim, **characterized in that** the system has at least one additional speaker arrangement (3.1, 3.2, 3.3, 3.4, 3.5) controllable by the renderer, which is able to be activated by the renderer in dependence on the position of the person (4.1, 4.2, 4.3, 4.4) identified as the recipient of person-related acoustic signals focused for transmission to the person (4.1, 4.2, 4.3, 4.4) identified as the recipient of person-related acoustic signals, with the first speaker arrangement (3.1, 3.2, 3.3, 3.4, 3.5) being able to be deactivated from transmission of person-related acoustic signals to the person (4.1, 4.2, 4.3, 4.4) identified as the recipient of person-related acoustic signals.

7. A method for making available a person-related audio transmission, in which at least one person (4.1, 4.2, 4.3, 4.4) is identified by at least one identifying feature at the recipient for person-related acoustic signals, and with it a position of the person (4.1, 4.2, 4.3, 4.4) identified as the recipient of person-related acoustic signals is detected and with the detected position of the person (4.1, 4.2, 4.3, 4.4) identified as the recipient of person-related acoustic signals, emitted by at least one audio source (3,1, 3.2, 3.3, 3.4, 3.5) person-related acoustic signals are transmitted by means of acoustic beam formation (5, 5.1, 5.2, 5.3, 5.4, 5.5, 5.6, 5.7, 5.8) focused on the position of the person (4.1, 4.2, 4.3, 4.4) identified as the recipient of person-related acoustic signals, wherein the position of the person (4.1, 4.2, 4.3, 4.4) identified as the recipient of person-related acoustic signals is tracked and the focus of acoustic beam formation (5, 5.1, 5.2, 5.3, 5.4, 5.5, 5.6, 5.7, 5.8) is adjusted to a change in the position of the person (4.1, 4.2, 4.3, 4.4) identified as the recipient of person-related acoustic signals.

8. The method of claim 7, **characterized in that** at least one facial feature of a person (4.1, 4.2, 4.3, 4.4) is detected, to identified the person (4.1, 4.2, 4.3, 4.4) as the recipient of person-related acoustic signals.

9. The method of claim 7 or claim 8, **characterized in that** a person (4.1, 4.2, 4.3, 4.4) is observed from more than one direction for identification as the recipient of person-related acoustic signals.

10. The method of any one of claims 7 to 9, **characterized in that** a position of a head (4.1.1., 4.2.1, 4.3.1, 4.4.1) of a person (4.1, 4.2, 4.3, 4.4) identified as the recipient of person-related acoustic signals is detected and using the detected position of the head (4.1.1, 4.2.1, 4.3.1, 4.4.1) the acoustic beam formation (5, 5.1, 5.2, 5.3, 5.4, 5.5, 5.6, 5.7, 5.8) of person-related acoustic signals is transmitted, focused on the position of the head (4.1.1, 4.2.1, 4.3.1, 4.4.1).

11. The method of any one of claims 7 to 10, **characterized in that** the acoustic beam formation (5, 5.1, 5.2, 5.3, 5.4, 5.5, 5.6, 5.7, 5.8) for transmission of person-related acoustic signals to the position of the person (4.1, 4.2, 4.3, 4.4) identified as the recipient of person-related acoustic signals, depending on the position of the person (4.1, 4.2, 4.3, 4.4) identified as the recipient of person-related acoustic signals, is related to at least one additional audio source.
